# EUROPEAN PATENT APPLICATION

(11) **EP 3 047 762 A1**
(43) Date of publication of application: **27.07.2016**
(21) Application number: 16152471.5
(22) Date of filing: 22.01.2016
(51) Int. Cl.: A47F 7/00, A01G 5/04, A01G 5/06, A47G 7/04, B65D 85/50

(54) **CUT-FLOWER DISPLAY APPARATUS**

(30) Priority: 23.01.2015 GB 201501148
(71) Applicant: Williams, John Harry Allan, 00200 Nairobi (KE)
(72) Inventor: Williams, John Harry Allan, 00200 Nairobi (KE)
(74) Representative: Hocking, Adrian Niall

(57) **Abstract**

A flower display apparatus (10) for displaying cut flowers (32), the apparatus (10) comprising: a display stand (12); at least one flower support element (14) at or adjacent to the display stand (12); a water container at least in part contained within the display stand (12), the water container including at least one fall which defines a flow path F for water to pass therethrough; a water circulation means (42) for pumping water from the bottom to the top of the said fall of the water container; and a water-conditioning means (50) for altering a condition of the water in the water container. At least part of the water container is exposed at or adjacent the or each flower support element (14) to permit a flower (32) placed therein to contact the water in the water container. A method of prolonging the display period of cut flowers (32) using the apparatus (10) is also provided.

## Description

The present invention relates to an apparatus for displaying cut flowers which is designed to prolong the display period of cut flowers contained therein, in particular, at the point of retail of the cut flowers. The invention also relates to a method of prolonging the display period of a cut flower using said apparatus.

Cut flowers are commonly given as gifts or used to decorate residential or commercial properties. Once cut, a flower will quickly begin to wilt and shed its leaves and petals, which reduces the aesthetic appeal and therefore commercial lifespan of the flower.

There are two primary factors in determining the lifespan of a cut flower whilst on display: the temperature; and the time elapsed since cutting. These two factors can be multiplied to give an indication of a likely display period when in a vase, for instance. The temperature at which a flower has been kept in degrees Celsius can be multiplied by the period for which it has been kept at that temperature in hours to derive a value in degree-hours. For example, a flower kept at 2 degrees for one day will have accrued 48 degree-hours. By way of comparison, a flower which has accrued around 300 degree-hours will wilt one day sooner when in a vase than one which has accrued zero degree-hours.

Flower growers can attempt to lengthen the lifespan of cut flowers by packing the flowers into cold storage at the point of cutting, substantially reducing the temperature multiplier of the degree-hour calculation. The flowers can then be kept at a reduced temperature during transit.

However, flowers when transported into a retail context will generally be displayed for long periods at room temperature, which leads to rapid degradation of the aesthetic appeal of the flowers.

Additionally, flowers on display in shops are typically kept in buckets of stagnant water which can easily become both nutrient-deprived and bacterially infested, since they require the person displaying the flowers to concentrate on replenishing the water and/or plant food.

It is therefore an object of the present invention to solve or substantially obviate the above-mentioned problems by providing a chilled flower display to limit the degradation of cut flowers at the point of sale.

According to a first aspect of the invention, there is provided a cut-flower display apparatus for displaying cut flowers, the apparatus comprising: a display stand; at least one flower support element at or adjacent to the display stand; a water container at least in part housed within the display stand, the water container defining a flow path for water to pass therein; a water circulation means for pumping water along the flow path of the water container; and a water-conditioning means for altering a condition of the water in the water container; wherein at least part of the water container is exposed at or adjacent the or each flower support element to permit a cut-flower placed therein to contact the water in the water container.

By providing a flower display apparatus having a circulating water supply, a number of benefits can be obtained. Firstly, the circulation of the water prevents the build-up of bacteria, which would normally be associated with stagnant water. Secondly, the fact that the water can be contained within a closed-circuit allows various conditions of the water to be controlled, such as the temperature, or nutrient composition. Furthermore, by allowing the water in the water container to be exposed to the air allows for the water to become naturally re-oxygenated. All of these factors contribute to an increased aesthetic lifespan for cut flowers whilst on display, and this has a subsequent effect on the lifespan of the flowers following purchase.

The exposure of at least part of the water container also permits air circulation in and around the cut-flower stems. This inhibits humidification of atmosphere which can encourage the growth of pathogenic fungi, for example botrytis cinerea, the growth of which can adversely affect the lifespan and aesthetic appeal of cut flowers.

Preferably. the water-conditioning means may include a water temperature controller, which ideally may be a chiller for cooling the water in the water container. Furthermore, there may also be an ultraviolet treatment device for irradiating the water in the water container, and additionally or alternatively, there may be a chemical treatment device for chemically dosing the water in the water container.

The condition of the water absorbed by the cut flowers whilst on display is critical in determining the viable period for which cut flowers will survive following purchase. In particular, the lower the temperature of the absorbed water, the more wilting of the flower can be greatly retarded. As such, by providing a water chiller, the flower can be sustained for a much greater period. Similarly, irradiation of the water can prevent bacterial infestation which may damage the flower, and the water can additionally be dosed with nutrients to maintain healthy flowers.

Optionally, the flow path of the water container may include at least one fall, and additionally, the water circulation means may pump water from the bottom to the top of the said fall.

By providing a fall as part of the flow path of the water container, the rate of oxygenation of the conditioned water is greatly increased, whilst also providing a natural flow path to prevent water from pooling and stagnating within localised areas of the water container.

In one preferred embodiment, the water container may be provided as a plurality of water channels formed within troughs, the troughs being vertically displaced from one another, and the fall being defined therebetween. Optionally, a plurality of flower support elements may be provided associated with each trough.

A tiered display stand advantageously has the benefit of providing an attractive stepped arrangement capable of displaying a large number of cut flowers at once, whilst also providing a water container which has a readily available fall, thereby allowing for facile re-oxygenation of the conditioned water.

The water circulation means may comprise a pump and pipe network, and furthermore, the water circulation means and water-conditioning means may be housed within the display stand.

A self-contained water circulation means limits the risk of egress of water from the apparatus, as well as ensuring that the apparatus is portable, since it will not be connected to a water mains.

The or each flower support element may be releasably attachable to the display stand, and the or each flower support element may be tilted towards a display face of the display stand. Optionally, the display stand may include a plurality of wheels so as to be mobile, and the display stand may further include an air vent to permit air flow therein.

The flower support element of existing flower display apparatuses is typically a water-filled bucket. A similar support may be utilised in the present invention, albeit one with the capability to permit a cut flower stem to penetrate into the water container. This allows for simple transfer of flowers to and from the apparatus. Furthermore, said flower support elements can be arranged so as to present a most aesthetically pleasing facet of the flowers towards the viewer, and this can be readily achieved by adopting a tilted approach.

Preferably, the water container may include a flower location element associated with the or each uncovered area.

A lower flower locator advantageously ensures both that the stem of the flower remains in the water container, and also that the flower remains in an upright, highly visible position.

In another preferred embodiment, the display stand may be provided as a plurality of modular sections, and furthermore the flow path of the water container may occur between the distinct said modular sections of the display stand. Said modular sections may optionally be mutually stackable.

By modularising the display stand of the flower display apparatus, it is possible to provide for a customisable unit, thereby allowing the user of the apparatus to create a bespoke display stand most suited for their display needs.

According to a second aspect of the invention, there is provided a method of prolonging a display period of a cut flower, preferably utilising a cut-flower display apparatus according to the first aspect of the invention, the method comprising the steps of: exposing a stem of the said cut flower to circulating conditioned water the water being at least temperature-conditioned; and allowing the flower to absorb the conditioned water, the absorbed conditioned water prolonging the display period of the cut flower. Preferably, the conditioned water may be cooled to a temperature in the range 1 to 10 degrees C, and more preferably to a temperature in the range 2 to 6 degrees C, and may be exposed to the atmosphere to oxygenate the conditioned water. This oxygenation may be enhanced by passing the conditioned water along a fall.

By conditioning the water which is provided to flowers on display, the display period of the flowers can be greatly extended. This beneficially ensures that flowers can be displayed for longer, reducing wastage for the supplier, whilst also ensuring that the flowers remain aesthetically pleasing for a greater period following purchase, which is highly advantageous for the consumer.

The invention will now be more particularly described, by way of example only, with reference to the accompanying drawings, in which:
Figure 1 shows a side representation of a first embodiment of a cut-flower display apparatus in accordance with the first aspect of the invention;
Figure 2 shows a cross-sectional representation of the cut-flower display apparatus of Figure 1;
Figure 3a shows an exploded perspective representation of the cut-flower display apparatus of Figure 1;
Figure 3b shows a compacted perspective view of the cut-flower display apparatus of Figure 3a;
Figure 4 shows a rear perspective representation of the cut-flower display apparatus of Figure 1;
Figure 5 shows a diagrammatic representation of the water-conditioning means of the cut-flower display apparatus of Figure 1;
Figure 6 shows a front perspective representation of a second, modular embodiment of a cut-flower display apparatus in accordance with the first aspect of the invention;
Figure 7 shows a side perspective representation of a modular component of a display stand of a third embodiment of cut-flower display apparatus in accordance with the first aspect of the invention; and
Figure 8 shows a top plan representation of the apparatus of Figure 7.

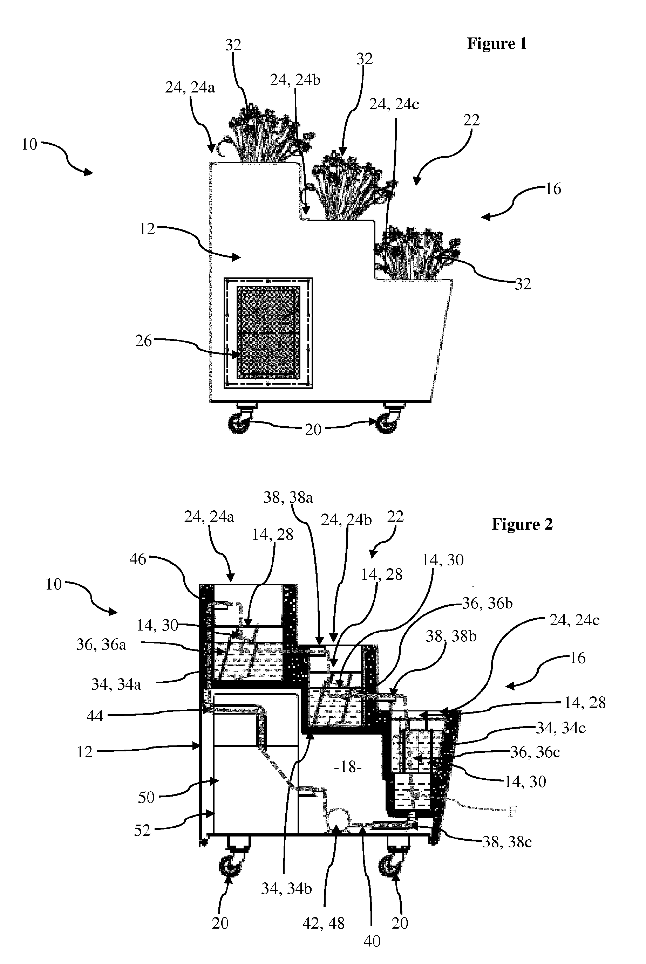

Referring firstly to Figures 1 to 4, there is shown a first embodiment of a cut-flower display apparatus, indicated globally at 10. The apparatus 10 comprises a display stand 12 having a plurality of flower support elements 14 positioned at or adjacent to a visible, front-facing portion 16 of the display stand 12.

The display stand 12 is a, preferably enclosed, unit, having a plurality of walls to define a chamber 18 therein, and may also include caster wheels 20 or similarly rotatable elements to permit the stand 12 to be mobile or portable and thus readily relocated. In the depicted embodiment, the display stand 12 has a tiered upper surface 22, thereby defining a series of vertically spaced-apart terraces 24; in Figures 1 to 3, there are shown three such terraces 24: an upper terrace 24a; a middle terrace 24b; and a lower terrace 24c. Any appropriately aesthetically pleasing stand may be considered, however. As such, the terraces may be dispensed with.

The display stand 12 is typically constructed from a water-impermeable or resistant material, such as a durable plastics material. However, given the likelihood of excess water spillage occurring within the chamber 18, there may be provided an air vent 26 associated with the display stand 12 to permit an air flow therethrough, encouraging evaporation of spilled water if necessary.

An upper surface of each terrace 24 is preferably substantially planar and elongate, having a plurality of apertures 28 therethrough which permit access into the chamber 18 of the display stand 12. Each flower support element 14 is associated with one of these apertures 28.

The flower support element 14 in the depicted embodiment includes a cylindrical tube or bucket 30 extending inwardly from an aperture 28 towards the chamber 18. The greater the length of the tube 30, the greater the support afforded to a cut flower stem 32 placed therein, but, depending upon the required level of support, a different construction may be considered. Each tube 30 may have a plurality of flow holes 33 bored into its exterior to allow a greater flow of water across the cut flower stem 32 placed therein, and additionally or alternatively may just be hollow at its lowermost end to allow the cut flower stem 32 to be directly immersed into the water thereunder.

The angular displacement of the tubes 30 can be altered to change the viewing angle of flowers placed therein with respect to a viewer standing in front of the display stand 12. In this embodiment, the tubes 30 associated with the upper and middle terraces 24a, 24b are positioned at an angle to their respective terrace 24a, 24b, whereas the tubes 30 of the lower terrace 24c are substantially vertical, thereby pointing generally towards a viewer. For ease of sanitisation, the flower support elements 14 may be removable from the rest of the display stand 12.

The cylindrical tubes 30 also serve as a flower locating element, ensuring that once a flower stem 32 is positioned within the flower support element 14, the cut end of the stem will readily locate therein so as to contact with water underneath. Furthermore, the tubes 30 also act as an access to the water thereunder, thereby ensuring that at least a portion of the display stand 12 is exposed to the atmosphere; closed units can be subject to excessive humidity, which can result to a greater susceptibility to infection from pathogenic fungi, such as botrytis cinerea.

Within the chamber 18 is located a water container; in this embodiment each terrace 24 extends into a trough 34, the trough 34 being a watertight channel 36 formed beneath the upper surface of the terrace 24. As the terraces 24 are arranged in a tiered configuration, the respective troughs 34 are also arranged in a tiered, vertically spaced-apart configuration.

Each trough 34 has a water outlet 38 positioned in fluid communication with its watertight channel 36 which discharges outside of the watertight channel 36. In the embodiment depicted in Figures 1 to 4, there are three troughs 34, each associated with one of the terraces 24a, 24b, 24c: an upper trough 34a; a middle trough 34b; and a lower trough 34c. The water outlet 38a of the upper trough 34a discharges into the middle trough 34b, the water outlet 38b of which discharges into the lower trough 34c. The water outlet 38c of the lower trough 34c is then connected to a fluid conduit 40 which feeds into a water recirculator 42. The water container in this embodiment is therefore a combination of the three water channels 36a, 36b, 36c, and a water flow path F is defined therebetween, shown in particular in Figure 2.

Water contained within the upper water channel 36a is therefore able to flow, via the middle water channel 36b, into the lower water channel 36c, thereby defining a water container having a predetermined fall from the upper trough 34a to the lower trough 34c. To ensure that a residual water volume is retained in each of the upper and middle water channels 36a, 36b however, the water outlets 38a, 38b are elevated with respect to the respective bases of the upper and middle troughs 34a, 34b. Since water is discharged into the lower water channel 36c, the lower water outlet 38c can be positioned in the base of the lower trough 34c. The fall is therefore stepped, and this results in a relatively gentle current running through the water container. However, this fall could just as easily be achieved having a more continuous gradient across its entirety, if this would be more appropriate for the particular design of flower display stand, or dispensed with entirely, with the water flow being entirely powered by the water recirculator 42.

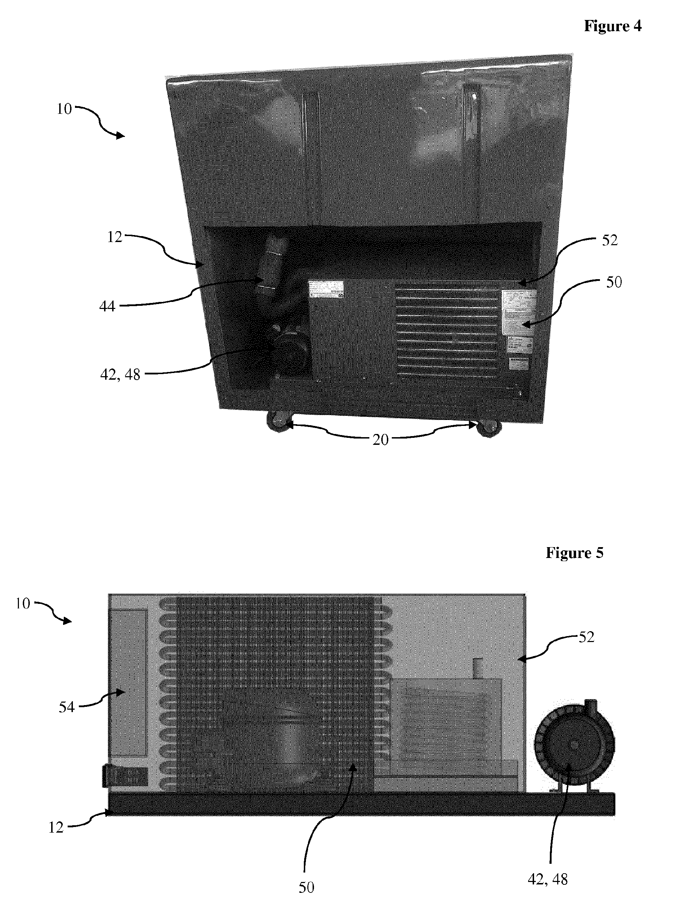

The water recirculator 42 is housed at least in part, and preferably entirely, within the display stand 12, and comprises a pipe network 44 which connects the lower water outlet 38c to a water inlet 46 of the upper trough 34a, and a pump 48, preferably a rotary pump; this arrangement is shown in more detail in Figure 5, which is capable of causing the water collected in the lower water channel 36c to be transferred to the upper water channel 36a. It will be apparent that any appropriate water circulation means could be used for this purpose, however.

Connected to the pipe network 44 is a water chiller 50, which in the present embodiment is located within a separate compartment 52 within the display stand 12. This chiller 50 is in this embodiment a vapour-compression refrigeration unit, having a compressor, condenser, expansion valve and evaporator arranged in series to provide a cooling effect to the water in the pipe network 44 via the evaporator, generally by using a fan 54 to provide convection currents of chilled air around the pipe network 44. The chiller 50 cools the water to a temperature typically in the range 1 to 10 degrees C, and preferably within the range 2 to 6 degrees C to best increase the longevity of the cut flowers 32 placed therein.

Additionally or alternatively, there may be provided a further means of conditioning the water in the water container, for example, by using an ultraviolet irradiation device and/or a chemical dosing device, to respectively kill bacteria within the water or feed the flowers 32.

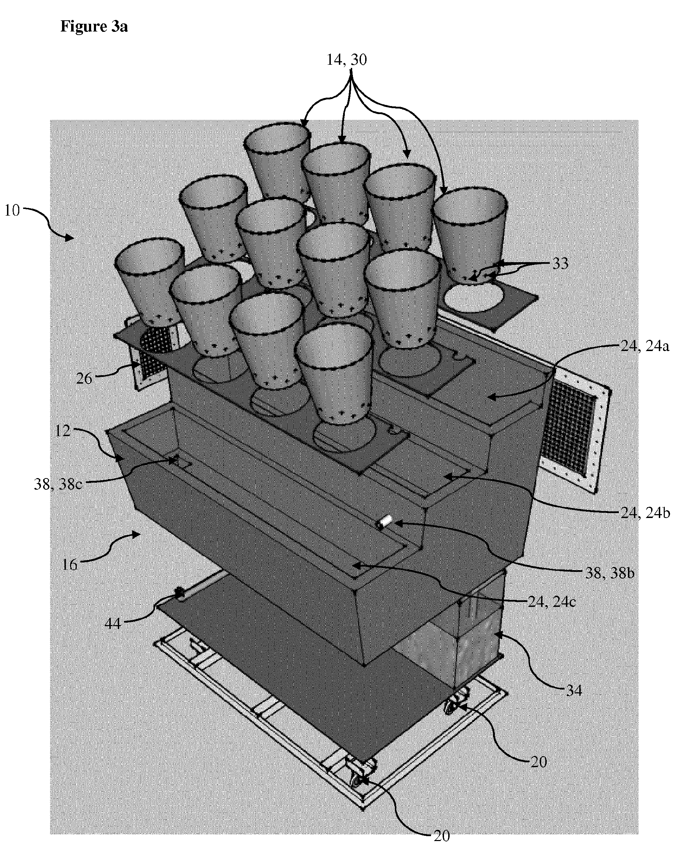

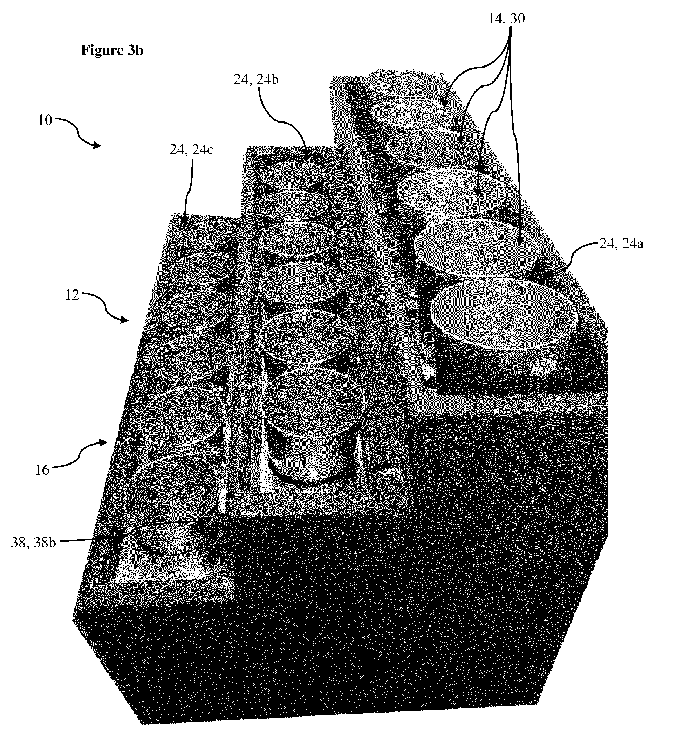

In use, the conditioned water, which is generally but not necessarily cooled by the chiller 50, running through the pipe network 44 is pumped into the upper water channel 36a. The water flows across the fall of the water container and, in doing so, becomes oxygenated. Because of the positioning of the upper and middle water outlets 38a, 38b, there will be a waterfall through exposed air amidst the water container, which greatly facilitates re-oxygenation of the water; however, the exposed portions of the water channels 36 at or adjacent the apertures 28 of the terraces 24 ensures that there is a sufficient air flow across the water in the troughs 34 regardless of whether such a waterfall is present, and the circulation of the water in the apparatus 10 will ensure re-oxygenation. Such an exposed waterfall may be provided on any or all of the falls between terraces 24. Exposed in this context is intended to mean that the respective water outlet 38a, 38b ejects the conditioned water out of the main body of the display housing 14, as can be seen from, in particular, Figures 2 and 3b.

The water in the container flows so as to eventually reach the lower water channel 36c, wherein the water exits through the lower water outlet 38c and back into the pipe network 44, wherein the water can be reconditioned and recirculated.

Cut flower stems 32 may be inserted into the flower support elements 14 of the display stand 12, such that the stems extend through a cylindrical tube 30, with the cut end of the stem being in contact with the conditioned water within the water channel 36 within the trough 34 associated with the said flower support element 14. Preferably, cut flower stems 32 will be inserted into the flower support elements 14 as bouquets, and thus the flower support elements 14 are sized so as to be capable of accommodating a standard bouquet stem diameter.

Because there is a flow path F defined across the water container, the water can flow and be reconditioned, all whilst becoming oxygenated due to the water flow. This is achievable because the water channels 36 of the water container are exposed or uncovered at or adjacent the apertures 28 and flower support elements 14 of the display stand 12, thereby allowing the stems of cut flowers 32 to contact the flowing water.

The flower display apparatus 10 is therefore capable of displaying a large number of cut flowers stems 32, in various arrangements in an aesthetically pleasing manner to a viewer, whilst prolonging the lifetime of the flowers 32 by providing a means for conditioning the water supplied to the stems.

The tiered arrangement of the above-described apparatus 10 is not the only means by which such a flower display stand could be constructed. Different embodiments could be considered, for example, by modularising the display stand of the apparatus.

The apparatus could comprise a display stand which is substantially modularised, with each terrace having its own individual display sub-stand. In this manner, the appearance of the overall apparatus can be altered to suit the user's needs. The water circulation means could be housed entirely within the largest sub-stand, with the pipe network interconnecting the individual sub-stands in a bespoke manner.

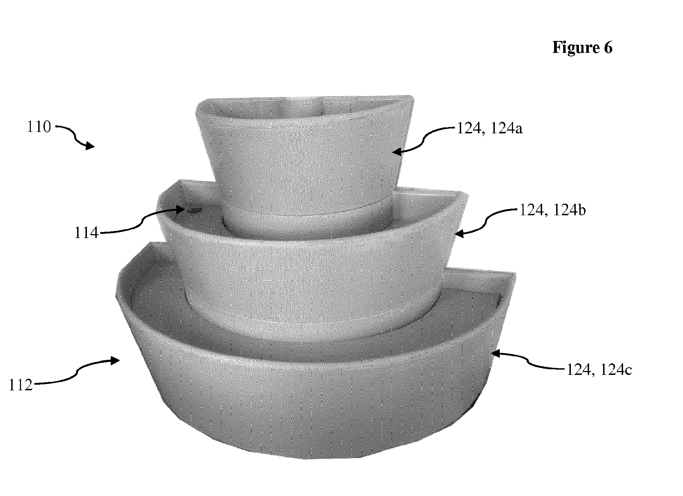

Possible embodiments of a modular display stand are illustrated in Figures 6, 7 and 8. Identical or similar references are used to indicate similar or identical components, and further detailed description will therefore be omitted for brevity.

A second embodiment of a cut flower display apparatus 110 is illustrated in Figure 6, wherein the display stand 112 comprises a plurality of concentric terraces 124 arranged so as to mimic the appearance of a fountain or similar water feature. Flower support elements 114 may be provided in any or all of the terraces 124; in the depicted embodiment, flower support elements 114 are provided only in the middle terrace 124b, with upper and lower terraces 124a, 124c being covered. The user of the apparatus 110 may therefore customise the display stand 112 to their own requirements.

In this particular embodiment, each of the terraces 124 is releasably engagable with one another, thereby allowing a further degree of customisability for the user of the apparatus 110.

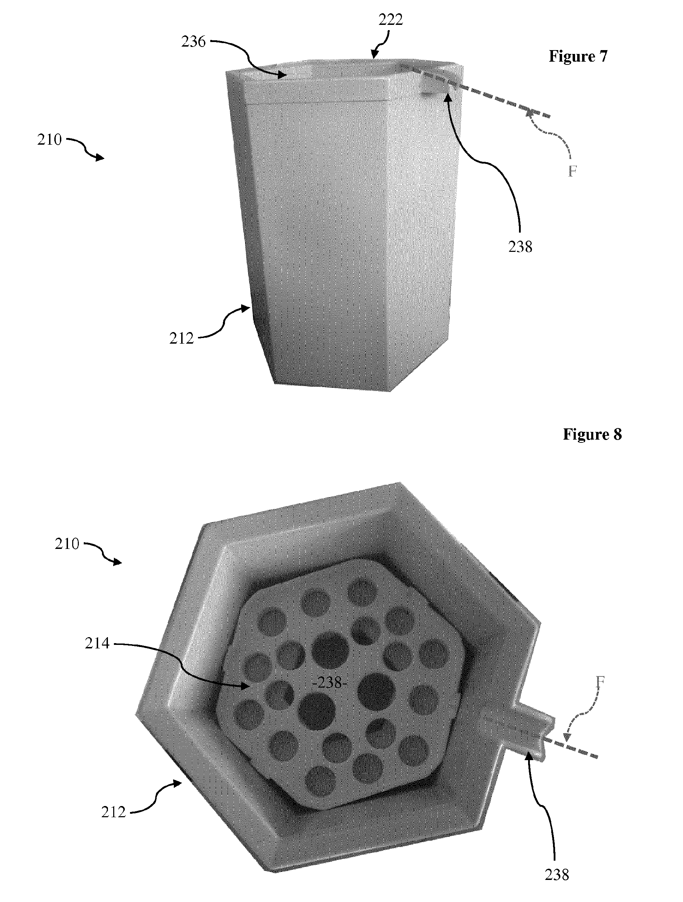

A portion of a third embodiment of a cut flower display apparatus 210 is shown in Figures 7 and 8. The part of the display stand 212 shown is substantially hexagonal in shape, allowing a plurality of said stands 212 to be arranged in a tiered honeycomb structure.

The display stand 212 defines a water container, here a reservoir 236 into which the flower support elements 214 may be positioned. This reservoir 236 can be filled up to an upper surface 222 of the display stand 212, such that the water therein may spill therefrom via a water outlet 238, here being a water spout.

A plurality of such display stands 212 of varying heights may be provided to create the complete apparatus, with the reservoirs 236 of successive display stands 212 overflowing via the water outlets 238 into the next display stand 212 along flow path F. The water may then be recirculated, using a water recirculation means not shown in this particular embodiment.

Whilst the flower support elements described above suggest a hollow physical retainer for cut flower stems, it will be appreciated that this is not the only means by which flowers can be supported. For example, foam-based supports are widely used in the industry, and, provided the cut flower stems can still extend into the conditioned water, such a support may be used instead. This is equally applicable to any type of flower support.

The described apparatuses are suggested as being open display stands. It will however be appreciated that an enclosed display stand, with access doors attached to the flower display region might also be considered; this would have the benefit of reducing water loss due to evaporation in hotter climates, reducing the environmental impact of the apparatus.

Similarly, whilst the display stands are illustrated as rectangular units, it will be understood that this is non-limiting, and any number of visually pleasing display stands could be considered, for example circular, non-circular or polygonal arrangements. The water containers are herebefore described as being used for the circulation of conditioned water. It will be readily apparent, however, that any appropriate liquid, capable of sustaining cut flowers, could be used as an alternative. One example might be a specialised liquid plant feed solution, although the solvent in such a scenario would generally be water.

It is therefore possible to provide a flower display apparatus which is capable of increasing the display period of cut flowers at the point of retail. This is achieved by providing a display stand which includes a water container therein, having a predetermined fall therethrough into which the cut flower stems can be positioned.

Since this is not a stagnant water supply, the water can be conditioned in a variety of ways, not least by chilling the flowers to limit wilting caused by elevated temperatures, in addition to the oxygenation effect which occurs due to the circulation of the water. This provides the optimum conditions for the flowers, ensuring that the consumer experiences the aesthetic pleasure of the cut flowers for a greater period following receipt.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention herein described and defined.

## Claims

1. A cut-flower display apparatus (10; 110; 210) for displaying cut flowers (32), the apparatus (10; 110; 210) comprising:
a display stand (12; 112; 212);
at least one flower support element (14; 114; 214) at or adjacent to the display stand (12; 112; 212);
a water container at least in part housed within the display stand (12; 112; 212), the water container defining a flow path (F) for water to pass therein;
a water circulation means for pumping water along the flow path of the water container; and
a water-conditioning means for altering a condition of the water in the water container;
wherein at least part of the water container is exposed at or adjacent the or each flower support element (14; 114; 214) to permit a cut-flower (32) placed therein to contact the water in the water container.

2. A cut-flower display apparatus (10; 110; 210) as claimed in claim 1, wherein the water-conditioning means includes a water temperature controller.

3. A cut-flower display apparatus (10; 110; 210) as claimed in claim 2, wherein the water temperature controller comprises a chiller (50) for cooling the water in the water container.

4. A cut-flower display apparatus (10; 110; 210) as claimed in any one of claims 1 to 3, wherein the water-conditioning means includes an ultraviolet and/or treatment device for irradiating the water in the water container.

5. A cut-flower display apparatus (10; 110; 210) as claimed in any one of the preceding claims, wherein the flow path of the water container includes at least one fall, the water circulation means pumping water from the bottom to the top of the said fall.

6. A cut-flower display-apparatus (10; 110; 210) as claimed in claim 5, wherein the water container is provided as a plurality of water channels (36a, 36b, 36c) formed within troughs (34a, 34b, 34c), the troughs (34a, 34b, 34c) being vertically displaced from one another, and the fall being defined therebetween

7. A cut-flower display apparatus (10; 110; 210) as claimed in claim 6, wherein a plurality of flower support elements (14; 114; 214) is provided associated with each trough (34a, 34b, 34c).

8. A cut-flower display apparatus (10; 110; 210) as claimed in any one of the preceding claims, wherein the water circulation means and water-conditioning means are housed within the display stand (12; 112; 212).

9. A cut-flower display apparatus (10; 110; 210) as claimed in any one of the preceding claims, wherein the water container includes a flower location element associated with the or each uncovered area.

10. A cut-flower display apparatus (110; 210) as claimed in any one of the preceding claims, wherein the display stand (114; 214) is provided as a plurality of modular sections.

11. A cut-flower display apparatus (110; 210) as claimed in claim 10, wherein the flow path (F) of the water container occurs between the distinct said modular sections of the display stand (114; 214).

12. A method of prolonging a display period of a cut flower (32) utilising a cut-flower display apparatus (10; 110; 210) as claimed in any one of the preceding claims, the method comprising the steps of:
exposing a stem of the said cut flower (32) to circulating conditioned water, the water being at least temperature-conditioned; and
allowing the flower (32) to absorb the conditioned water, the absorbed conditioned water prolonging the display period of the cut flower.

13. A method as claimed in claim 12, wherein the conditioned water is cooled to a temperature in the range 1 to 10 degrees C, and preferably in the range 2 to 6 degrees C.

14. A method as claimed in claim 12 or claim 13, wherein the conditioned water is exposed to the atmosphere to oxygenate the conditioned water.

15. A method as claimed in claim 14, wherein the oxygenation of the conditioned water is enhanced by passing the conditioned water along a fall.
